# EUROPEAN PATENT APPLICATION

(11) **EP 4 537 659 A1**
(43) Date of publication of application: **16.04.2025**
(21) Application number: 23383048.8
(22) Date of filing: 12.10.2023
(51) Int. Cl.: A01K 79/00

(54) **CONVEYING DEVICE FOR PUMPING LIVE FISH**

(71) Applicant: Instalaciones Frigolan SL, 20749 Arroa-Zestoa (ES)
(72) Inventor: ANDERSEN, Jens Peter Korsholm, Ribe (DK); GARCIA MANDAYO, Alberto, Aizarna-Zestoa (ES)
(74) Representative: Igartua, Ismael

(57) **Abstract**

Conveying device (1) for pumping live fish from a first receptacle to a second receptacle, comprising a first tank (11), a second tank (12), and pump means (15). The conveying device (1) is configured to alternatively create a low-pressure vacuum in one of the first tank (11) or in the second tank (12) for filling the corresponding tank with live fish, and simultaneously act on the other tank creating a high-pressure for emptying said other tank, the time required for filling the corresponding tank being greater than the time required for emptying the other tank, changing the pressure in said other tank to atmospheric pressure when it is emptied, and subsequently equalizing the pressure in said other tank to the pressure in the corresponding tank.

## Description

### TECHNICAL FIELD

The present invention relates to conveying devices for pumping live fish from a first receptacle to a second receptacle, and to methods of pumping live fish from a first receptacle to a second receptacle by means of a conveying device.

### PRIOR ART

Conveying devices for pumping live fish by means of a double tank system from a first receptacle to a second receptacle are known. Said conveying devices work by filling one tank while emptying the other tank, such that the tank being filled, and the tank being emptied change cycle by cycle. In these kind of conveying devices in between each cycle there is a small gap in the flow, which results in a small back flush in the suction side of the conveying device, located in the first receptacle, which scares the fish and pushes them away from the suction side of the conveying device. As a consequence, during approximately 40% of the time there is no fish at the suction side of the conveying device, which makes it necessary to crowd the fish at the suction side. This back flush also makes fish on its way to the tank being filled be exposed to various accelerations as a consequence of the acceleration of the water in the first receptacle near the suction side in each pumping cycle, which leads to the fish being stressed.

CN109757423A discloses a live fish vacuum conveying device comprising a bracket, a fist collecting tank and a second collecting tank arranged side by side on said bracket, an inlet pipe, an outlet pipe, a negative pressure pump, a switching device, four one-way valves and a liquid level sensor in each of the first collecting tank and second collecting tank. The inlet pipe and the outlet pipe are Y-shaped, such that two branches of the inlet pipe are connected to the inlets of the fist tank and the second tank, and two branches of the outlet pipe are connected to the outlets of the first tank and the second tank. There is a one-way valve at the inlet and at the outlet of each of the first tank and the second tank. The negative pressure pump comprises an intake pipe and an exhaust pipe, which are in communication with the first tank and the second tank through the air pressure switching device. The fish vacuum conveying device is configured to alternatively create a low-pressure vacuum in the first collecting tank or in the second collecting tank for filling the corresponding tank with live fish, and simultaneously creating a high-pressure on the second collecting tank or on the first collecting tank for emptying the corresponding tank.

### DISCLOSURE OF THE INVENTION

The object of the invention is to provide a conveying device for pumping live fish from a first receptacle to a second receptacle, and a method of pumping live fish from a first receptacle to a second receptacle by means of a conveying device as defined in the claims.

The conveying device for pumping live fish from a first receptacle to a second receptacle comprises a first tank and a second tank into which said live fish are pumped, said first tank and said second tank comprising an inlet and an outlet. The conveying device comprises a suction line connected to the first receptacle, the inlet of the first tank and the inlet of the second tank, and a discharge line connected to the outlet of the first tank, the outlet of the second tank and the second receptacle. The conveying device also comprises pump means alternatively connectable to the first tank or to the second tank, for creating a low-pressure vacuum for filling the corresponding tank with live fish or for creating a high-pressure in the corresponding tank for emptying said tank. The conveying device is configured to work alternatively in a first cycle and in a second cycle.

In the first cycle the conveying device is configured to create a low-pressure vacuum in the first tank, the first tank being therefore the tank being filled during the first cycle, and simultaneously act on the second tank creating a high-pressure in the second tank, the second tank being therefore the tank being emptied in the first cycle, the time required for filling the first tank being greater than the time required for emptying the second tank, change the pressure in the second tank to atmospheric pressure when the second tank is emptied, and subsequently equalize the pressure in the second tank to the pressure in the first tank. The conveying device is configured to switch to the second cycle when the pressure in the first tank and in the second tank is equalized.

In the second cycle the conveying device is configured to create a low-pressure vacuum in the second tank, the second tank being therefore the tank being filled during the second cycle, and simultaneously act on the first tank creating a high-pressure in the first tank, the first tank being therefore the tank being emptied in the second cycle, the time required for filling the second tank being greater than the time required for emptying the first tank, change the pressure in the first tank to atmospheric pressure when the first tank (11) is emptied, and subsequently equalize the pressure in the first tank to the pressure in the second tank (12). The conveying device is configured to switch to the first cycle when the pressure in the first tank and in the second tank is equalized.

The invention also relates to a method of pumping live fish from a first receptacle to a second receptacle by means of a conveying device, the conveying device comprising a first tank and a second tank into which said live fish are pumped from the first receptacle and are supplied to the second receptacle. The method comprises a first cycle and a second cycle which are sequentially executed.

The first cycle comprises the steps of creating a low-pressure vacuum in the first tank for filling the first tank with live fish, the first tank being therefore the tank being filled, simultaneously acting on the second tank sequentially performing the steps of creating a high-pressure in the second tank for emptying said second tank, the second tank being therefore the tank being emptied, the time required for filling the first tank being greater than the time required for emptying the second tank, changing the pressure in the second tank to atmospheric pressure when the second tank is emptied, and subsequently equalizing the pressure in the second tank to the pressure in the first tank, and switching to the second cycle when the pressure in the first tank and the second tank is equalized.

The second cycle comprises the steps of creating a low-pressure vacuum in the second tank for filling the second tank with live fish, the second tank being therefore the tank being filled, and simultaneously acting on the first tank sequentially performing the steps of creating a high-pressure in the first tank for emptying said first tank, the first tank being therefore the tank being emptied, the time required for filling the second tank being greater than the time required for emptying the first tank, changing the pressure in the first tank to atmospheric pressure when the first tank is emptied, and subsequently equalizing the pressure in the first tank to the pressure in the second tank, and switching to the first cycle when the pressure in the first tank and the second tank is equalized.

In the conveying devices known in the state of the art a small back flush is created in the suction side of the conveying device, this is, in the part of the first receptacle near the suction line, every time the tank being filled passes to be the tank being emptied and vice versa. However, in the conveying device and in the method of pumping live fish of the invention, the pressure in the first tank and in the second tank is the same at the moment when the change from one cycle to another occurs, that is, when the tank that was being filled becomes the tank to be emptied, and the tank that had been emptied becomes the tank to be filled. This makes the flow on the suction side of the conveying device have a constant speed, therefore being a constant flow. One of the advantages of said constant flow is that the fish are not scared, and thus, they are not pushed away from said suction side, thus, less crowding of the fish is needed at the suction side. By having a constant flow, the fish does not sense any danger and will flow stress free into the suction line. Another advantage of having a constant and laminar flow in the suction side of the conveying device is that the speed of the water column entering the suction line is higher in the center of the cross section of the suction line which ensures an optimum positioning of the fish in the center of the suction line, which makes it possible to pump the fish over longer distances and through a number of fittings and valves, with a reduced risk of getting into contact with the suction line wall, thus, reducing the risk of mechanical damages to the fish.

### DESCRIPTION OF THE DRAWINGS

Figure 1 shows a front view of a preferred embodiment of a conveying device 1, wherein the first receptacle and the second receptacle are not shown.
Figure 2 shows a plan view of the conveying device 1 of Figure 1.
Figure 3 shows a plan view of the preferred embodiment of the conveying device 1 of Figure 1 wherein the connecting device 17 has been schematically represented, and to which a collector tank 16 is incorporated.
Figure 4 shows the preferred embodiment of the conveying device of Figure 3, wherein the pump means 15 and the connecting device 17 are not shown.
Figure 5 shows the flowchart of an embodiment of the method of the invention.
Figure 6 shows the flowchart of the method of Figure 5 with the step of creating a high-pressure in the collector tank 16.
Figure 7 shows the preferred embodiment of the conveying device 1 of Figure 3, with the tanks schematically represented, wherein the connecting device 17 illustrates a first sub-step of a first cycle of the method of the invention.
Figure 8 shows the preferred embodiment of the conveying device of Figure 3, with the tanks schematically represented, wherein the connecting device 17 illustrates a second and a third sub-step of a first cycle of the method of the invention.
Figure 9 shows the preferred embodiment of the conveying device of Figure 3, with the tanks schematically represented, wherein the connecting device 17 illustrates a fourth sub-step and a fifth sub-step of a first cycle of the method of the invention.
Figure 10 shows the preferred embodiment of the conveying device of Figure 3, with the tanks schematically represented, wherein the connecting device 17 illustrates a sixth sub-step of a first cycle of the method of the invention.
Figure 11 shows the preferred embodiment of the conveying device of Figure 3, with the tanks schematically represented, wherein the connecting device 17 illustrates a seventh sub-step of a first cycle of the method of the invention.
Figure 12 shows the preferred embodiment of the conveying device of Figure 3, with the tanks schematically represented, wherein the connecting device 17 illustrates an eighth sub-step of a first cycle of the method of the invention.
Figure 13 shows a schematic depiction of an embodiment of the control system 500 configured to implement the method of the invention.

### DETAILED DISCLOSURE OF THE INVENTION

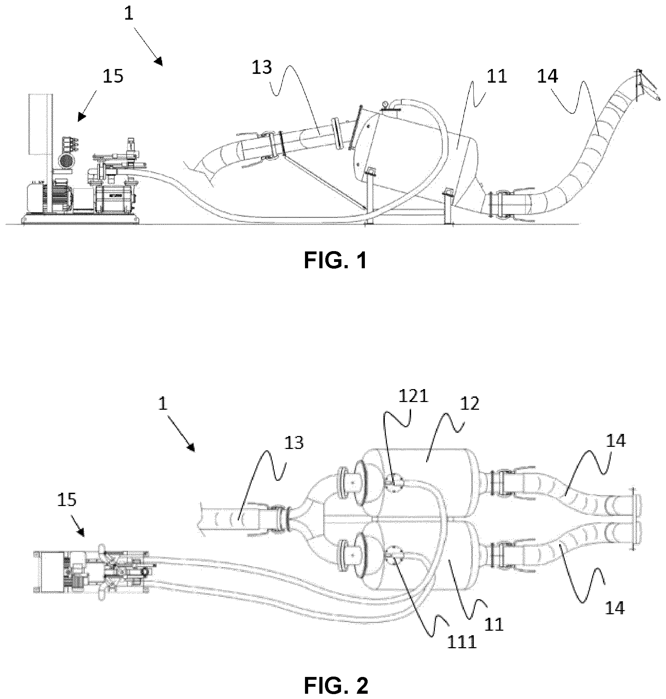

Figures 1 to 4 and 7 to 12 show a preferred embodiment of the conveying device 1 for pumping live fish from a first receptacle to a second receptacle of the invention.

The conveying device 1 of the invention comprises a first tank 11 and a second tank 12 into which the live fish are pumped, said first tank 11 and said second tank 12 comprising an inlet and an outlet. The conveying device 1 comprises a suction line 13 connected to the first receptacle, the inlet of the first tank 11 and the inlet of the second tank 12, and a discharge line 14 connected to the outlet of the first tank 11, the outlet of the second tank 12 and the second receptacle. The conveying device 1 also comprises pump means 15 alternatively connectable to the first tank 11 or to the second tank 12, for creating a low-pressure vacuum for filling the corresponding tank with live fish or for creating a high-pressure in the corresponding tank for emptying said tank. The conveying device 1 is configured to work alternatively in a first cycle and in a second cycle.

In the first cycle the conveying device 1 is configured to create a low-pressure vacuum in the first tank 11, the first tank 11 being therefore the tank being filled during the first cycle, and simultaneously act on the second tank 12 creating a high-pressure in the second tank 12, the second tank 12 being therefore the tank being emptied in the first cycle, the time required for filling the first tank 11 being greater than the time required for emptying the second tank 12, change the pressure in the second tank 12 to atmospheric pressure when the second tank 12 is emptied, and subsequently equalize the pressure in the second tank 12 to the pressure in the first tank 11. The conveying device 1 is configured to switch to the second cycle when the pressure in the first tank 11 and in the second tank 12 is equalized.

In the second cycle the conveying device 1 is configured to create a low-pressure vacuum in the second tank 12, the second tank 12 being therefore the tank being filled during the second cycle, and simultaneously act on the first tank 11 creating a high-pressure in the first tank 11, the first tank 11 being therefore the tank being emptied in the second cycle, the time required for filling the second tank 12 being greater than the time required for emptying the first tank 11, change the pressure in the first tank 11 to atmospheric pressure when the first tank 11 is emptied, and subsequently equalize the pressure in the first tank 11 to the pressure in the second tank 12. The conveying device 1 is configured to switch to the first cycle when the pressure in the first tank 11 and in the second tank 12 is equalized.

The fist receptacle and the second receptacle are not shown in the Figures of the present application. Both the first and the second receptacles are two delimited areas in which fish and water can be housed. Said first and second receptacles can therefore be a delimited zone of the sea, said zone being delimited by a net, for example, a container in which both fish and water can be housed, a ship's fish holding tank, etc.

Figures 1 and 2 shows a preferred embodiment of the conveying device 1 of the invention. In said preferred embodiment the first tank 11 and the second tank 12 are arranged side by side on a bracket. The first tank 11 comprises an inlet and an outlet, such that the fish enters the first tank 11 through said inlet and gets out of the first tank 11 through said outlet. In the same way, the second tank 12 also comprises an inlet and an outlet, such that the fish enters the second tank 12 through said inlet and gets out of the second tank 12 through said outlet. In the preferred embodiment of Figures 1 and 2 the suction line 13 comprises a Y-shaped pipe, such that a first branch of the suction line 13 can be introduced in the first receptacle, a second branch is connected to the inlet of the first tank 11, and a third branch is connected to the inlet of the second tank 12. In the preferred embodiment of Figures 1 and 2 the discharge line 14 comprises two independent pipes, such that a first end of said pipes is connected to the respective outlet of the first tank 11 or the second tank 12, and the second end of both pipes can be introduced in the second receptacle. However, in other embodiments, said suction line 13 and said discharge line 14 can be implemented in a different way. In another embodiment of the conveying device 1, the discharge line comprises a Y-shaped pipe, such that a first branch of the discharge line can be introduced in the second receptacle, a second branch is connected to the outlet of the first tank 11, and a third branch is connected to the outlet of the second tank 12.

In the preferred embodiment of the conveying device 1, the first tank 11 and the second tank 12 comprise a suction valve each, arranged at the inlet of said first tank 11 and said second tank 12, such that when the interior of the first tank 11 or of the second tank 12 is subjected to a low-pressure vacuum, said suction valve is opened, thus allowing live fish to enter into the first tank 11 or into the second tank 12 from the first receptacle. However, when the tank is subjected to a high-pressure, said suction valve remains closed. In the same way, the first tank 11 and the second tank 12 comprise a discharge valve each, arranged at the outlet of said first tank 11 and said second tank 12, such that when the interior of the first tank 11 or of the second tank 12 is subjected to a high-pressure, said discharge valve is opened, thus allowing live fish to be discharged from the first tank 11 or from the second tank 12 to the second receptacle. However, when the tank is subjected to a low-pressure vacuum, said discharge valve remains closed. In an embodiment of the conveying device, the suction valves and the discharge valves are flapper valves.

As shown in the preferred embodiment of Figures 1 and 2, the conveying device 1 comprises pump means 15 for creating a low-pressure vacuum in one of the tanks for filling said tank with live fish, and for simultaneously creating a high-pressure in the other tank for emptying said other tank. Pump means 15 are connected alternatively to the first tank 11 and to the second tank 12, such that when a low-pressure vacuum is created in the first tank 11 by means of vacuum air, a high-pressure is created in the second tank 12 by means of compressed air, and vice versa, when a low-pressure vacuum is created in the second tank 12 by means of vacuum air, a high-pressure is created in the first tank 11 by means of compressed air. When a low-pressure vacuum is created in the first tank 11, fish, together with water, are suctioned from the first receptacle through the suction line 13 into the first tank 11. At the same time, a high-pressure is being created in the second tank 12 such that the fish and water in the second tank 12 are pushed to the discharge line 14 and then to the second receptacle by means of the compressed air introduced into the second tank 12 by the pump means 15. When pump means 15 are connected in the other way, this is, when a low-pressure vacuum is created in the second tank 12, fish, together with water, are suctioned from the first receptacle through the suction line 13 into the second tank 12, while, at the same time, a high-pressure is being created in the first tank 11 such that the fish and water in the first tank 11 are pushed to the discharge line 14 and then to the second receptacle.

The conveying device 1 of the invention characterizes in that during the first cycle, the time required for filling the first tank 11 is greater than the time required for emptying the second tank 12, and in that during the second cycle the time required for filling the second tank 12 is greater than the time required for emptying the first tank 11. That is, during the time in which one of the tanks is filled, the other tank is first emptied, then, the pressure of said other tank is changed to atmospheric pressure, and then, the pressure in the said other tank is equalized to the pressure in the tank being filled. By doing so, a constant, steady and regulable flow on the suction side of the conveying device 1 is obtained. Fish welfare and quality are one of the most important objectives when handling live fish. By having a constant flow on the suction side of the conveying device 1, fish are less scared, less stressed, have less risk of mechanical damage, and are not exposed to various accelerations, which results in better fish welfare.

Therefore, during the first cycle, the second tank 12 is being emptied only during part of the time the first cycle lasts, the rest of the time being used to bring the second tank 12 to atmospheric pressure, and then, to the same pressure as the first tank 11. In the context of the invention, we will refer to the second tank 12 as the tank being emptied in the first cycle, even though said second tank 12 is being emptied only during part of the first cycle time. In the same way, in the context of the invention, we will refer to the first tank 11 as the tank being emptied in the second cycle, even though said first tank 11 is being emptied only during part of the first cycle time.

In the context on the invention, by equalizing the pressure in the second tank 12 to the pressure in the first tank 11, it is meant to change the pressure in the second tank 12 such that it becomes equal to the pressure in the first tank 11. In the same way, by equalizing the pressure in the first tank 11 to the pressure in the second tank 12, it is meant to change the pressure in the first tank 11 such that it becomes equal to the pressure in the second tank 12.

In an embodiment of the invention, the conveying device 1 comprises a collector tank 16 connecting the discharge line 14 to the second receptacle, the conveying device 1 being configured to create a high-pressure in the collector tank 16 while the pressure in the tank being emptied in the corresponding cycle is first changed to atmospheric pressure and then to the pressure in the tank being filled during said cycle.

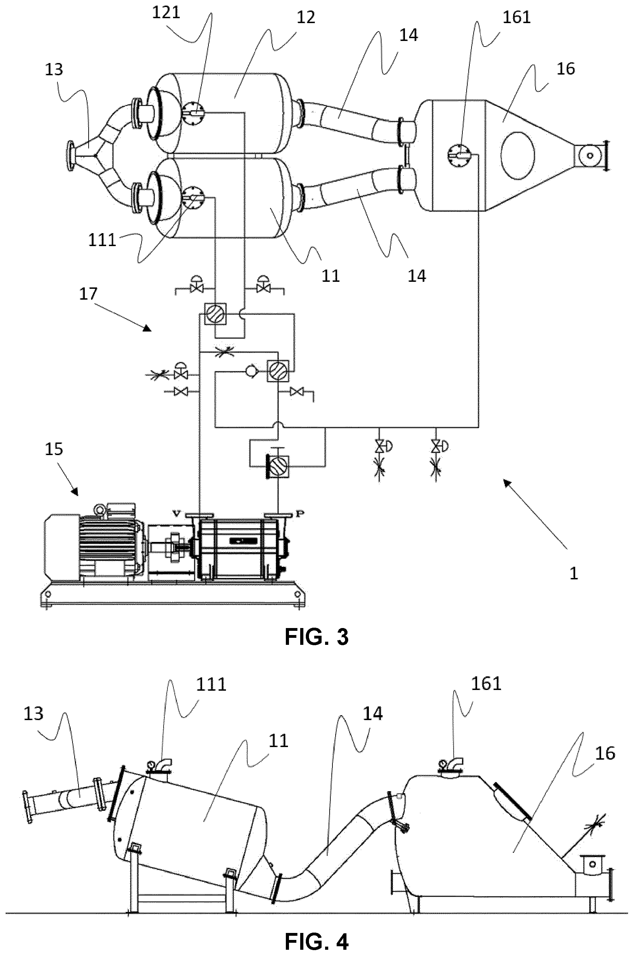

Figures 3 and 4 shows a conveying device 1 comprising a collector tank 16 according to a preferred embodiment of the invention. The collector tank 16 is located between the discharge line 14 and the second receptacle. When the first tank 11 or the second tank 12 is being emptied, fish in said tank moves from said tank to the collector tank 16 through the discharge line 14, and from the collector tank 16 to the second receptacle. However, once the first tank 11 or the second tank 12 has been emptied, the pressure of the tank being emptied is first changed to atmospheric pressure, and then, its pressure is equalized to the pressure in the tank being filled. During the period of time during which the pressure of the tank being emptied is first changed to atmospheric pressure, and then, it is equalized to the pressure in the tank being filled, the speed of the flow of fish from the collector tank 16 to the second receptacle slows down. By creating a high pressure in the collector tank 16 during that period of time, the flow of fish from the collector tank 16 to the second receptacle is prevented from slowing down, thus, providing a constant flow of fish, not only on the suction side of the conveying device 1, but also on the discharge side of the conveying device 1 of the invention. The collector tank 16 comprises an inlet and an outlet. In the embodiment of Figures 3 and 4, the discharge line 14 is connected to the outlet of the first tank 11, the outlet of the second tank 12 and the inlet of the collector tank 16, while the outlet of the collector tank 16 is connected to the second receptacle by a pipe not shown in the Figures. By said constant flow on the discharge side, fish welfare is ensured not only on the suction side of the conveying device 1, but also on the discharge side of it, the discharge side of the conveying device 1 being the part of the second receptacle near the pipe connecting the collector tank 16 with said second receptacle.

According to a preferred embodiment of the conveying device 1, the collector tank 16 comprises a suction valve arranged at the inlet of the collector tank 16, and a discharge valve arranged at the outlet of the collector tank 16, said suction valve and said discharge valve working in the same manner as the suction valves and discharge valves arranged in the first tank 11 and in the second tank 12.

According to a preferred embodiment of the conveying device 1, the pump means 15 comprise a vacuum connector 151 and a pressure connector 152, the first tank 11 comprises an air connector 111, the second tank 12 comprises an air connector 121, and the conveying device 1 comprises a connecting device 17 comprising a plurality of valves for connecting the vacuum connector 151, the pressure connector 152, the air connector 111 of the first tank 11, and the air connector 121 of the second tank 12. The conveying device 1 further comprises a control system 500 configured to control the plurality of valves of the connecting device 17. In the preferred embodiment of the invention, the pump means 15 is a single combined vacuum pump/compressor comprising a pressure connector 152 by which compressed air is generated, and a vacuum connector 151 by which vacuum is generated, such that, at the beginning of each cycle, when the vacuum connector 151 is connected to the first tank 11, the pressure connector 152 is connected to the second tank 12 and vice versa. In another embodiment, the pump means comprise a vacuum pump comprising a vacuum connector 151 by which vacuum is generated, and an air compressor comprising a pressure connector 152 by which compressed air is generated, such that, at the beginning of each cycle, when the vacuum connector 151 is connected to the first tank 11, the pressure connector 152 is connected to the second tank 12 and vice versa.

In a preferred embodiment of the conveying device 1, the control system 500 is connected to the plurality of valves of the connecting device 17. The control system 500 is configured to generate and send a control signal to each of the valves of the connecting device 17, said control signal indicating to the corresponding valve which position said valve has to adopt. On the other hand, the control system 500 is in communication with the pump means 15 and is configured to control the operation of said pump means 15.

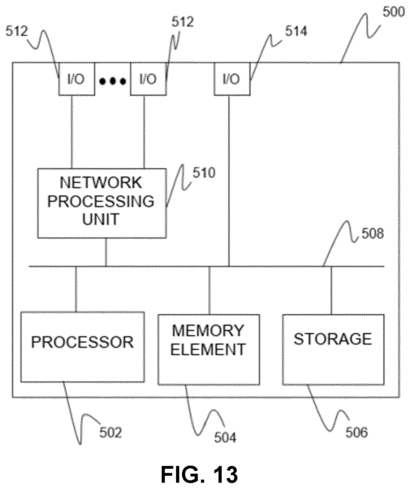

In at least one embodiment, the control system 500 may include one or more processors 502, one or more memory elements 504, storage 506, a bus 508, one or more network processing units 510 interconnected with one or more network input/output (I/O) interfaces 512, one or more I/O interfaces 514, and a computer program 520, said computer program 520 being stored in the memory element 504 and/or the storage 506. Figure 13 shows a schematic depiction of an embodiment of the control system 500.

In at least one embodiment, the memory element 504 and/or storage 506 are configured to store data, information, software, and/or instructions associated with the control system 500, and/or the logic configured for the memory element 504 and/or storage 506.

In at least one embodiment, the bus 508 can be configured as an interface that enables one or more elements of the control system 500 to communicate with each other so as to exchange information and/or data. The bus 508 can be implemented with any architecture designed for exchanging control, data, and/or information between processors, memory elements/storage, peripheral devices, and/or any other hardware and/or software component that may be configured for the control system 500.

In several embodiments, the network processor unit(s) 510 may enable communication between the control system 500 and other systems, entities, etc., through the network I/O interface(s) 512 (wired and/or wireless). In several embodiments, the network I/O interface(s) 512 can be configured as one or more Ethernet ports, fibre channel ports, any other I/O port(s) and/or antennas/antenna array that are known now or may be developed in the future. Therefore, the network processor unit(s) 510 and/or the network I/O interface(s) 512 may include suitable interfaces for receiving, transmitting, and/or otherwise communicating data and/or information in a network environment.

I/O interfaces 514 allow the input and output of data and/or information with other entities which may be connected to the control system 500. For example, the I/O interfaces 514 may provide a connection to external devices such as a keyboard, numerical keypad, a touch screen, and/or any other suitable input and/or output device that is known now or may be developed in the future. In some instances, the external devices can also include (non-transitory) computer-readable storage media such as database systems, USB memories, portable optical or magnetic discs and memory cards. In still some instances, the external devices can be a mechanism for displaying data to a user, such as a computer monitor, a display screen, or the like.

In several embodiments, the computer program 520 can include instructions which, when executed, cause the processor or processors 502 to perform operations, which can include, among others, providing overall control operations of the control system 500, interacting with other entities, systems, etc. described herein, maintaining and/or interacting with stored data, information, parameters, etc. (for example, memory element(s), storage, data structures, databases, tables, etc.); combinations thereof; and/or the like so as to allow the control system 500 to generate and send a control signal to each of the valves of the connecting device 17, said signal indicating to the corresponding valve which position said valve has to adopt.

In some cases, the computer program 520 of the present embodiments can be available via a non-transitory computer-usable storage medium (for example, magnetic or optical media, magneto-optical media, CD-ROM, DVD, memory devices, etc.). In some cases, the non-transitory computer-readable storage media can also be removable.

In a preferred embodiment of the conveying device 1 the first tank 11 and a second tank 12 comprise an empty level sensor and a full level sensor in communication with the control system 500. The empty level sensor is configured to generate and send an electric signal to the control system 500 when it detects that the level of fish and water in the tank is below a predetermined emptying level. On the other hand, the full level sensor is configured to generate and send an electric signal to the control system 500 when it detects that the level of fish and water is over a predetermined fill level. In the context of the invention, it is considered that the tank being filled is full when the full level sensor of said tank detects that the level of fish and water in said tank is over the predetermined fill level. In the context of the invention, it is considered that the tank being emptied is empty when the empty level sensor of said tank detects that the level of fish and water in said tank is below the predetermined emptying level. When the control system 500 receives the electric signal from the empty level sensor, the control system 500 is configured to control the plurality of valves of the connecting device 17 such that the pressure connector 152 is disconnected from the air connector 111, 121 of the tank being emptied, and such that the pressure in the tank being emptied is changed to atmospheric pressure.

In a preferred embodiment of the conveying device 1 the collector tank 16 comprises an empty level sensor and a full level sensor in communication with the control system 500, said empty level sensor and said full level sensor working in the same manner as the empty level sensors and full level sensors arranged in the first tank 11 and in the second tank 12.

In a preferred embodiment of the conveying device 1 the connecting device 17 comprises a stand-by valve 23 connected to the air connector 111, 121 of each of the first tank 11 and the second tank 12. Said stand-by valve 23 is configured to allow an operator to interrupt the pumping cycle while the conveying device 1 keeps running and restart the pumping cycle when flow is required. When the stand-by valve 23 connected to the air connector 111, 121 of the tank being filled is opened, vacuum air is no longer taken from the tank being filled, but from said stand-by valve, thus suctioning of fish into the tank being filled being interrupted. When the stand-by valve 23 connected to the air connector 111, 121 of the tank being emptied is opened, pressure air is no longer introduced into the tank being emptied, instead, pressure air is directed to open-air through said stand-by valve 23, thus discharge of fish from the tank being emptied being interrupted. In the preferred embodiment shown in Figure 3 the stand-by valves 23 are connected to the atmosphere.

In a preferred embodiment of the conveying device 1 the connecting device 17 comprises an air intake valve 26 connected to the vacuum connector 151 of the pump means 15, the air intake valve 26 being in an open position while a high-pressure is created in the tank being emptied and while the pressure in the tank being emptied is changed to atmospheric pressure, therefore permitting the passage of an amount of air such that the time required for filling the tank being filled in the corresponding cycle is greater than the time required for emptying the tank being emptied in said same cycle. As shown in the preferred embodiment of Figure 3, when vacuum is created in one of the tanks vacuum air is not only taken from said tank, but also from the air intake valve 26, which permits regulating the charge or filling speed of the tank being filled, such that the time required for filling the tank being filled in the corresponding cycle is greater than the time required for emptying the tank being emptied in said same cycle. The control system 500 is in communication with and configured to control the operation of the air intake valve 26, thus regulating the time required for filling the tank being filled in the first or in the second cycle so that it is greater than the time required for emptying the tank being emptied in said same first or second cycle. In a preferred embodiment of the conveying device, the air intake valve 26 is an adjustable flow control valve.

In a preferred embodiment of the conveying device 1 the connecting device 17 comprises a connection valve 27 connectable to the air connector 111 of the first tank 11 and to the air connector 121 of the second tank 12. The control system 500 is in communication with and configured to control the operation of the connection valve 27. When the connection valve 27 is in an open position, the air connectors 111 of the first tank 11 and the air connector 121 of the second tank 12 get connected. Once the tank being emptied in each cycle is ventilated, this is, the tank being emptied is at atmospheric pressure, the control system 500 is configured to open the connection valve 27, thus communicating the first tank 11 and the second tank 12 so that pressure in the tank being emptied equalizes to the pressure in the tank being filled. For the pressure in the tank being emptied to equalize the pressure in the tank being filled in the corresponding cycle, the control system 500 is configured to close the stand-by valve 23 connected to the air connector 111, 121 of the tank being emptied in said cycle, so that said tank is no longer ventilated at atmospheric air, and to close the air intake valve 26. By closing the air intake valve 26, the conveying device 1 can no longer get the amount of air necessary for the time required for filling the tank in the corresponding cycle being greater than the time required for emptying the tank from the atmospheric air thorough said air intake valve 26. Instead, the conveying device 1 is configured to get said amount of air from the tank being emptied thorough the connection valve 27. In that sense, the control device 500 is configured to control the operation of the connection valve 27 so that the amount of air passing through the connection valve 27 is the same as the amount of air passing before through the air intake valve 26. Therefore, the suction force generated in the tank being filled remains constant, and in consequence, the charge or filling speed of the tank being filled remains constant too, thus keeping the speed of the flow from the first receptacle to the tank being filled constant. Once the pressure in the tank being emptied is equal to the pressure in the tank being filled, the control system 500 is configured to close the connection valve 27. In a preferred embodiment of the conveying device, the connection valve 27 is an adjustable flow control valve.

In a preferred embodiment of the conveying device 1 the connecting device 17 comprises a vacuum security valve 251 connected to the vacuum connector 151 and a pressure security valve 252 connected to the pressure connector 152. The vacuum security valve 251 is configured to ensure a way for vacuum air into the pump means 15 in case no other way is possible. The pressure security valve 252 is configured to ensure a way for pressure air from the pump means 15 to atmosphere in case no other way is possible.

In a preferred embodiment of the conveying device 1 the collector tank 16 comprises an air connector 161, and the pressure connector 152 is connectable to the air connector 161 of the collector tank 16. The connecting device 17 of the conveying device 1 is configured for connecting the pressure connector 152 and the air connector 161 of the collector tank 16.

In a preferred embodiment of the conveying device 1, the conveying device comprises a first pressure sensor configured to sense the pressure in the first tank 11, and a second pressure sensor configured to sense the pressure in the second tank 12. The first pressure sensor and the second pressure sensor are in communication with the control system 500. The first pressure sensor is configured to generate and send an electric signal to the control system 500, said electric signal being indicative of the pressure in the first tank 11. The second pressure sensor is configured to generate and send an electric signal to the control system 500, said electric signal being indicative of the pressure in the second tank 12. In a preferred embodiment of the conveying device 1, the control system 500 is configured to receive the electric signal from the first pressure sensor, and the electric signal of the second pressure sensor and compare both electric signals to know if the pressure in both signals is the same. The control system 500 is also configured to detect if the pressure in the first tank 11 or in the second tank 12 is the atmospheric pressure.

In a preferred embodiment of the conveying device 1 the connecting device 17 comprises a first four-way valve 21, a second four-way valve 22, and preferably, a third four-way valve 24.

In a preferred embodiment of the conveying device 1, each of the first four-way valve 21, the second four-way valve 22, and the third four-way valve 24 have four ports equally spaced round a valve chamber, and a plug having two passages configured to connect adjacent ports. The first four-way valve 21, the second four-way valve 22, and the third four-way valve 24 have two flow positions, and preferably an additional central position where all ports are closed. As shown in Figure 3 the ports of the first four-way valve 21 are connectable to the vacuum connector 151, the air connector 111 of the first tank 11, the air connector 121 of the second tank 12, and to one of the ports of the second four-way valve 22. The ports of the second four-way valve 22 are connectable to the vacuum connector 151 by means of the air intake valve 26, the air connector 121 of the first tank 11 or the air connector 121 of the second tank 12 by means of the first four-way valve 21, the pressure connector 152 by means of the third four-way valve, and the air connector 161 of the collector tank 16. The ports of the third four-way valve 24 are connectable the pressure connector 152, to the second for-way valve 22, the air connector 161 of the collector tank 16, and one of them is closed.

In an embodiment of the conveying device 1 in which there is no collector tank 16, the conveying device 1 comprises a first four-way valve 21, and a second four-way valve 22. In said embodiment the ports of the first four-way valve 21 are connectable to the vacuum connector 151, the air connector 111 of the first tank 11, the air connector 121 of the second tank 12, and to one of the ports of the second four-way valve 22, and the ports of the second four-way valve 22 are connectable the vacuum connector 151 by means of the air intake valve 26, the air connector 121 of the first tank 11 or the air connector 121 of the second tank 12 by means of the first four-way valve 21, the pressure connector 152, and one of the ports to the atmosphere.

The control system 500 is in communication with and configured to control the operation of the first four-way valve 21, the second four-way valve 22, and the third four-way valve 24.

In a preferred embodiment of the conveying device 1 the connecting device 17 comprises a one-way valve 28. Said one-way valve 28 connects the second four-way valve 22 to the air connector 161 of the collector tank 16, as shown in Figure 3.

In an embodiment of the conveying device 1 in which there is no collector tank 16, the one-way valve 28 is located between the second four-way valve 22 and the atmosphere.

In a preferred embodiment of the conveying device 1, the connecting device 17 comprises a collector raising level valve 291 connected to the air connector 161 of the collector tank 16. The collector raising level valve 291 is configured to allow the air inside the collector tank 16 flow to the outside of the collector tank 16, to the atmosphere. The collector raising level valve 291 is an adjustable flow control valve. The control system 500 is in communication with and configured to control the operation of the collector raising level valve 291. The control system 500 is configured for regulating the amount of air flowing through the collector raising level valve 291 such that the flow of fish and water from the collector tank 16 to the second receptacle is a speed constant flow during the operation of the conveying device 1. The conveying device 1 of the invention uses the compressed air generated by the pump means 15 to create a high-pressure in the collector tank 16 while said compressed air is not used to empty either the first tank 11 or the second tank 12. By regulating the amount of air flowing through the collector raising level valve 291 to the atmosphere, a constant flow at the discharge side of the conveying device 1 of the invention is obtained.

In a preferred embodiment of the conveying device 1, the connecting device 17 also comprises a collector lowering level valve 292 connected to the air connector 161 of the collector tank 16. The collector lowering level valve 292 is configured to allow the air inside the collector tank 16 flow to the outside of the collector tank 16, to the atmosphere. The collector lowering level valve 292 is an adjustable flow control valve. The control system 500 is in communication with and configured to control the operation of the collector lowering level valve 292. The control system 500 is configured for regulating the amount of air flowing through the collector lowering level valve 292 such that the flow of fish and water from the collector tank 16 to the second receptacle is a speed constant flow during the operation of the conveying device 1. In this embodiment, the control system 500 is configured for regulating the amount of air flowing through the collector raising level valve 291 and the collector lowering level valve 292 such that a constant flow at the discharge side of the conveying device 1 of the invention is obtained.

In an embodiment of the conveying device 1, the stand-by valve 23, the air intake valve 26, the connection valve 27, the collector raising level valve 291, and the collector lowering level valve 292 are servo operated butterfly valves.

In a preferred embodiment of the conveying device 1 the first tank 11 has the same capacity as the second tank 12.

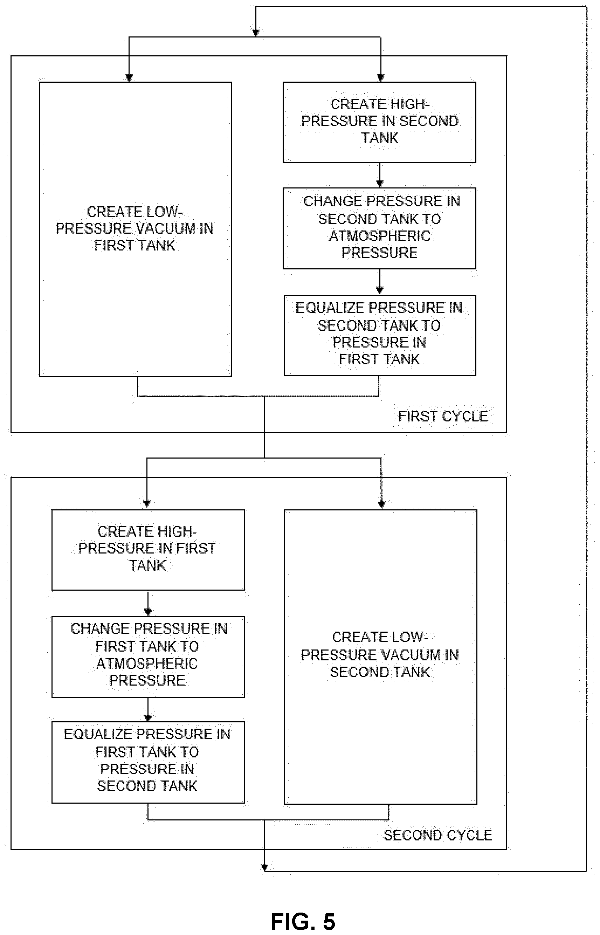

The invention also relates to a method of pumping live fish from a first receptacle to a second receptacle by means of a conveying device 1. The conveying device 1 comprises a first tank 11 and a second tank 12 into which said live fish are pumped from the first receptacle and are supplied to the second receptacle. The method comprises a first cycle and a second cycle which are sequentially executed. Figure 5 shows the flowchart of an embodiment of the method of the invention.

The first cycle comprises the steps of creating a low-pressure vacuum in the first tank 11 for filling the first tank 11 with live fish, the first tank 11 being therefore the tank being filled, simultaneously acting on the second tank 12 sequentially performing the steps of creating a high-pressure in the second tank 12 for emptying said second tank 12, the second tank 12 being therefore the tank being emptied, the time required for filling the first tank 11 being greater than the time required for emptying the second tank 12, changing the pressure in the second tank 12 to atmospheric pressure when the second tank 12 is emptied, and subsequently equalizing the pressure in the second tank 12 to the pressure in the first tank 11, and switching to the second cycle when the pressure in the first tank 11 and in the second tank 12 is equalized.

The second cycle comprises the steps of creating a low-pressure vacuum in the second tank 12 for filling the second tank 12 with live fish, the second tank 12 being therefore the tank being filled, and simultaneously acting on the first tank 11 sequentially performing the steps of creating a high-pressure in the first tank 11 for emptying said first tank 12, the first tank 11 being therefore the tank being emptied, the time required for filling the second tank 12 being greater than the time required for emptying the first tank 11, changing the pressure in the first tank 11 to atmospheric pressure when the first tank 11 is emptied, and subsequently equalizing the pressure in the first tank 11 to the pressure in the second tank 12, and switching to the first cycle when the pressure in the first tank 11 and in the second tank (12) is equalized.

By means of the method of the invention, a constant, steady and regulable flow on the suction side of the conveying device 1 is obtained. Fish welfare and quality are one of the most important objectives when handling live fish. By having a constant flow on the suction side of the conveying device 1, fish are less scared, less stressed, have less risk of mechanical damage, and are not exposed to various accelerations, which results in better fish welfare.

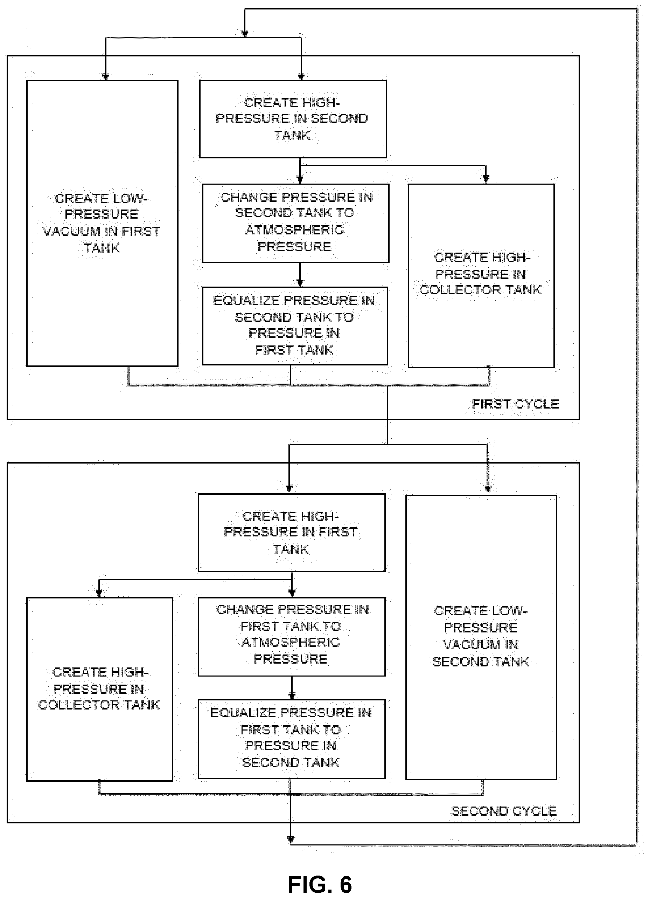

In an embodiment of the method of pumping live fish from a first receptacle to a second receptacle by means of a conveying device 1 comprising a collector tank 16 connecting the first tank 11 and the second tank 12 to the second receptacle, the method comprises both in the first cycle and in the second cycle the step of creating a high pressure in the collector tank 16 while the pressure in the tank being emptied is first changed to atmospheric pressure and then to the pressure in the tank being filled during said cycle. Figure 6 shows the flowchart of the method of the invention, wherein the step of creating a high-pressure in the collector tank 16 has been introduced. By means of the method of the invention, a constant flow of fish is provided also on the discharge side of the conveying device 1. By said constant flow on the discharge side, fish welfare is ensured not only on the suction side of the conveying device 1, but also on the discharge side of it.

In an embodiment of the method of pumping live fish from a first receptacle to a second receptacle by means of a conveying device 1 comprising a collector raising level valve 291 configured to allow the air inside the collector tank 16 flow to the outside of the collector tank 16, the collector raising level valve 291 being an adjustable flow control valve, the method comprises a step of regulating the collector raising level valve 291 such that the flow from the collector tank 16 to the second receptacle is a speed constant flow. The step of regulating the collector raising level valve 291 takes place during all the first cycle, and also during all the second cycle. By said regulation, a constant flow is provided at the discharge side of the conveying device, thus assuring fish welfare.

The method of the invention is configured to be implemented in the conveying device 1 of the invention.

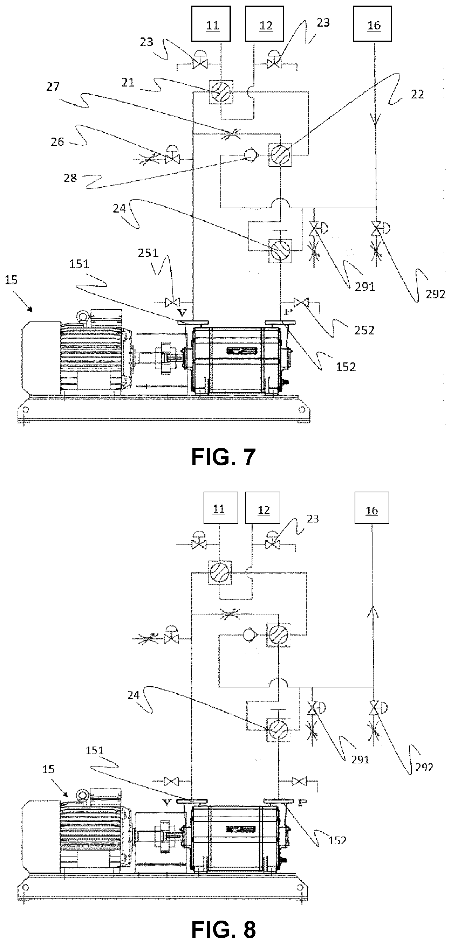

Figure 7 illustrates how the first four-way valve 21, the second four-way valve 22, and the third four-way valve 24 are disposed in a first sub-step of the first cycle of the method of the invention in which a low-pressure vacuum is created in the first tank 11 and a high-pressure is created in the second tank 12. In said first sub-step the vacuum connector 151 of the pump means 15 is connected to the air connector 111 of the first tank 11 and the pressure connector 152 is connected to the air connector 121 of the second tank 12 by means of the first four-way valve 21, the second four-way valve 22, and the third four-way valve 24. In said first sub-step the conveying device 1 is working normally and is not in a stand-by state, thus the stand-by valves 23 are closed. In said first sub-step the air intake valve 26 is open thus permitting the passage of an amount of air from the atmosphere to the pump means 15, which makes the time required for filling the first tank 11 be greater than the time required for emptying the second tank 12. In this first sub-step, the connection valve 27 is closed. During said first sub-step, the collector raising level valve 291 is open, such that as fish and water flow from the tank being emptied to the collector tank 16, air inside the collector tank 16 gets out of said collector tank 16 to the atmosphere through said collector raising level valve 291. The control system 500 is configured to regulate the collector raising level valve 291 such that the amount of air that can flow through said collector raising level valve 291 is such that the flow of fish and water from the collector tank 16 to the second receptacle is a speed constant flow. In an embodiment wherein the conveying device also comprises a collector lowering level valve 292, the collector lowering level valve is closed.

Once the empty level sensor of the second tank 12 detects that the level of fish and water in the second tank 12 is below a predetermined level in which it is considered that the second tank is empty, it generates and sends an electric signal to the control system 500. When the control system 500 receives the electric signal from the empty level sensor of the second tank 12, the method performs the step of changing the pressure in the second tank 12 to atmospheric pressure. For changing the pressure in the second tank 12 to atmospheric pressure, the method performs a second and a third sub-step. In the second sub-step of the method, the pressure air generated by the pump means 15 is redirected, such that instead of entering the tank being emptied, it enters the collector tank 16. Figure 8 illustrates the second sub-step of the first cycle of the method of the invention in which the first tank 11 continues being filled, and which takes place just before the pressure of the second tank 12 is changed to atmospheric pressure. For that purpose, the control system 500 generates and sends a control signal to the third four-way valve 24 such that pressure connector 152 is no longer connected to the air connector 121 of the second tank 12. Instead, the control signal generated by the control system 500 and sent to the third four-way valve 24 indicates the third four-way valve 24 to move to a position in which the pressure connector 152 is connected to the air connector 161 of the collector tank 16. The control system 500 also generates and sends a signal to the collector raising level valve 291 to regulate the flow of air getting out of the collector tank 16 from said collector raising level valve 291 such that the flow at the discharge side of the conveying device 1 is constant. In an embodiment in which the conveying device also comprises a collector lowering level valve 292, the control system 500 generates and sends a signal to the collector lowering level valve 292 so as to move it to its open position so as to regulate the flow of air getting out of the collector tank 16 from said collector raising level valve 291 and said collector lowering level valve 292 such that the flow at the discharge side of the conveying device 1 is constant. The other valves and four-way valves remain in the same position they were.

Figure 8 also illustrates the position of the four-way valves in the third sub-step of the method, which takes place immediately after the second sub-step, and in which the control system 500 generates and sends a control signal to the stand-by valve 23 connected to the air connector 121 of the second tank 12 indicating that said stand-by valve has to move to an open position so that the pressure of the second tank 12 changes to atmospheric pressure. In this third sub-step, the control system 500 also generates and sends a signal to the collector raising level valve 291 to regulate the flow of air getting out of the collector tank 16 from said collector raising level valve 291 such that the flow at the discharge side of the conveying device 1 is constant. In an embodiment in which the conveying device also comprises a collector lowering level valve 292, the control system 500 generates and sends a signal to the collector raising level valve 291 so as to move it to its closed position, and to the collector lowering level valve 292 to regulate the flow of air getting out of the collector tank 16 from said collector lowering level valve 292 such that the flow at the discharge side of the conveying device 1 is constant.. The other valves and four-way valves remain in the same position they were.

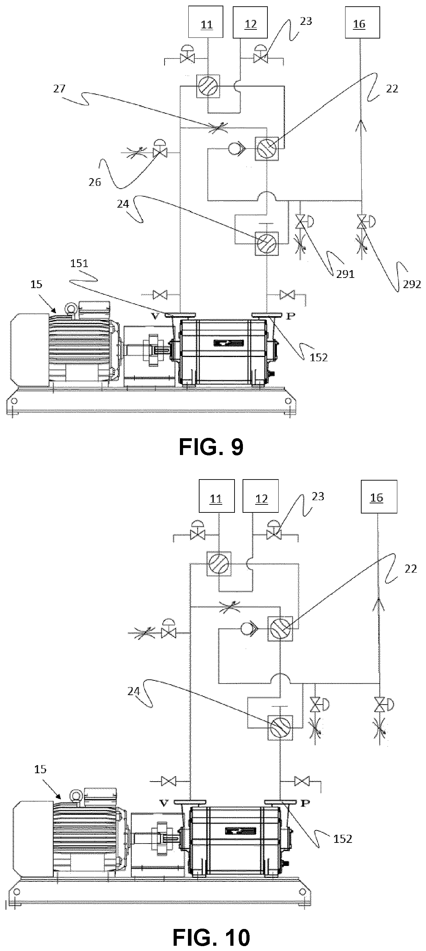

The second pressure sensor is configured to generate and send an electric signal to the control system 500, said electric signal being indicative of the pressure in the second tank 12, and the control system 500 is configured to receive the electric signal from the second pressure sensor and identify if the second tank is at atmospheric pressure. Once the control system 500 detects that the second tank 12 is at atmospheric pressure, the method performs the step of equalizing the pressure in the second tank 12 to the pressure in the first tank 11. For equalizing the pressure in the second tank 12 to the pressure in the first tank 11, the method performs a fourth sub-step, a fifth sub-step, a sixth sub-step and a seventh sub-step. In the fourth sub-step of the first cycle of the method illustrated in Figure 9, the first tank 11 and the second tank 12 are communicated so that the pressure in both tanks is equalized. For that purpose, the control system 500 generates and sends a control signal to the second four-way valve 22 indicating that the second four-way valve 22 has to move to a position which connects the connection valve 27 with the air connector 121 of the second tank 12. The control system 500 also generates and sends a control signal to the connection valve 27 so that it moves to an open position. This way, the air connectors 111, 121 of the first tank 11 and the second tank 12 get communicated. As the stand-by valve 23 connected to the air connector 121 of the second tank 12 is still in an open position, this sub-step has to be fast enough so that the pressure in the first tank 11 does not drop. The other valves and four-way valves remain in the same position they were.

Immediately, in a fifth sub-step of the first cycle of the method also illustrated in Figure 9, the control system 500 generates and sends a control signal to the stand-by valve 23 connected to the air connector 121 of the second tank 12 indicating that said stand-by valve has to move to a closed position so that the second tank 12 is no longer connected to atmosphere. The control system also generates and sends a control signal to the air intake valve 26 indicating said air intake valve 26 to move to a closed position. By closing the air intake valve 26, the conveying device 1 can no longer obtain thorough said air intake valve 26 the amount of atmospheric air necessary so that the time required to fill the first tank 11 is greater than the time required to empty the second tank 12. Instead, the conveying device 1 obtains said amount of air from the second tank 12 thorough the connection valve 27. In that sense, the control device 500 is configured to control the operation of the connection valve 27 so that the amount of air passing through the connection valve 27 is the same as the amount of air passing in the previous step through the air intake valve 26. Therefore, the suction force generated in the first tank 11 remains constant, and in consequence, the charge or filling speed of the first tank 11 remains constant too, thus keeping the speed of the flow from the first receptacle to the first tank 11 constant. The other valves and four-way valves remain in the same position they were.

Immediately, in a sixth sub-step of the first cycle of the method illustrated in Figure 10, the control system 500 generates and sends a control signal to the third four-way valve 24 such that it changes its position to a new position in which it connects the pressure connector 152 to the second four-way valve 22. However, this movement has no effect in the working of the conveying device 1, as pressure air getting out of the pressure connector 152 continues entering the collector tank 16. The other valves and four-way valves remain in the same position they were.

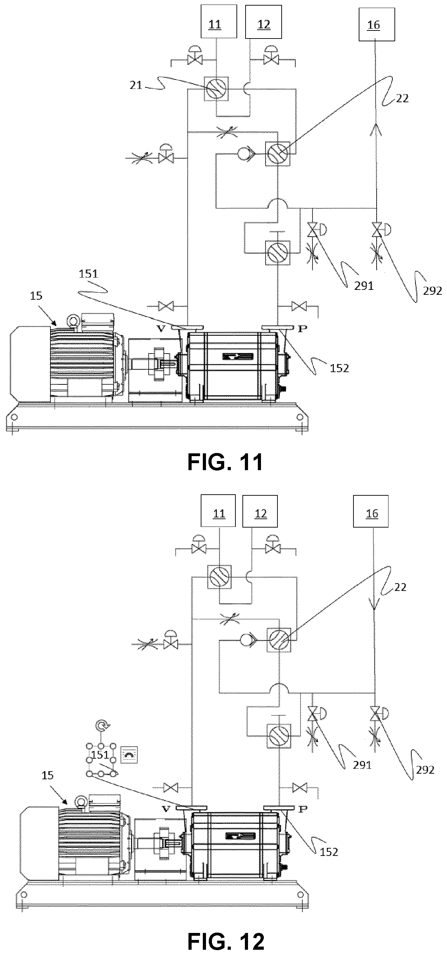

Immediately, in a seventh sub-step of the first cycle of the method illustrated in Figure 11, the control system 500 generates and sends a control signal to the first four-way valve 21, such that it changes its position to a new position in which it connects the vacuum connector 151 to the second tank 12, and the first tank 11 to the second four-way valve 22. However, this movement has no effect in the working of the conveying device 1, as the low-pressure vacuum continues being created in the first tank 11 and in the second tank 12, as the air connector 111 of the first tank 11 is connected to the air connector 121 of the second tank 12. In this seventh sub-step, the control system 500 also generates and sends a signal to the collector raising level valve 291 to regulate the flow of air getting out of the collector tank 16 from said collector raising level valve 291 such that the flow at the discharge side of the conveying device 1 is constant. In an embodiment in which the conveying device also comprises a collector lowering level valve 292, the control system 500 generates and sends a signal to the collector raising level valve 291 so as to move it to its open position, and to the collector lowering level valve 292 to regulate the flow of air getting out of the collector tank 16 from said collector lowering level valve 292 such that the flow at the discharge side of the conveying device 1 is constant. The other valves and four-way valves remain in the same position they were.

The first pressure sensor is configured to generate and send an electric signal to the control system 500, said electric signal being indicative of the pressure in the first tank 11, the second pressure sensor is configured to generate and send an electric signal to the control system 500, said electric signal being indicative of the pressure in the second tank 12, and the control system 500 is configured to receive the electric signal from the first pressure sensor and from the second pressure sensor and compare both electric signals to know if the pressure in both tanks is the same. Once the control system 500 detects that the second tank 12 is at the same pressure as the first tank 11, the method performs the step of switching to the second cycle. For switching to the second cycle the method performs an eighth sub-step, illustrated in Figure 12, wherein the control system 500 generates and sends a control signal to the second four-way valve 22 such that it changes its position to a new position in which it connects the pressure connector 152 to the first tank 11, and generates and sends a control signal to the connection valve 27 so as to move it to its closed position. At the same time the control system 500 also generates and sends a signal to the collector raising level valve 291 to regulate the flow of air getting out of the collector tank 16 from said collector raising level valve 291 such that the flow at the discharge side of the conveying device 1 is constant. In an embodiment in which the conveying device also comprises a collector lowering level valve 292, the control system 500 generates and sends a signal to the collector lowering level valve 292 so as to move it to its closed position, and to the collector raising level valve 291 to regulate the flow of air getting out of the collector tank 16 from said collector raising level valve 291 such that the flow at the discharge side of the conveying device 1 is constant. The other valves and four-way valves remain in the same position they were. At this moment, the method of the invention executes the steps of the second cycle. In said second cycle, the control system is configured to repeat the steps of the first cycle, with the only difference that in the first cycle the tank being filled was the first tank 11 and the tank being emptied was the second tank 12, however, in the second cycle, the tank being filled will be the second tank 12 and the tank being emptied will be the first tank 11, this is, the tank that is filled and the tank that is emptied are interchanged cycle by cycle.

## Claims

1. Conveying device for pumping live fish from a first receptacle to a second receptacle, comprising:
- a first tank (11) and a second tank (12) into which said live fish are pumped, said first tank (11) and said second tank (12) comprising an inlet and an outlet,
- a suction line (13) connected to the first receptacle, the inlet of the first tank (11) and the inlet of the second tank (12),
- a discharge line (14) connected to the outlet of the first tank (11), the outlet of the second tank (12) and the second receptacle, and
- pump means (15) alternatively connectable to the first tank (11) or to the second tank (12), for creating a low-pressure vacuum for filling the corresponding tank with live fish or for creating a high-pressure in the corresponding tank for emptying said tank,
the conveying device (1) being configured to work alternatively in a first cycle and in a second cycle,
**characterized in that** in the first cycle the conveying device (1) is configured to
- create a low-pressure vacuum in the first tank (11), the first tank (11) being therefore the tank being filled during the first cycle, and
- simultaneously
∘ act on the second tank (12) creating a high-pressure in the second tank (12), the second tank (12) being therefore the tank being emptied in the first cycle, the time required for filling the first tank (11) being greater than the time required for emptying the second tank (12),
∘ change the pressure in the second tank (12) to atmospheric pressure when the second tank (12) is emptied, and
∘ subsequently equalize the pressure in the second tank (12) to the pressure in the first tank (11),
the conveying device (1) being configured to switch to the second cycle when the pressure in the first tank (11) and in the second tank (12) is equalized, such that in the second cycle the conveying device (1) is configured to
- create a low-pressure vacuum in the second tank (12), the second tank (12) being therefore the tank being filled during the second cycle, and
- simultaneously
∘ act on the first tank (11) creating a high-pressure in the first tank (11), the first tank (11) being therefore the tank being emptied in the second cycle, the time required for filling the second tank (12) being greater than the time required for emptying the first tank (11),
∘ change the pressure in the first tank (11) to atmospheric pressure when the first tank (11) is emptied, and
∘ subsequently equalize the pressure in the first tank (11) to the pressure in the second tank (12),
the conveying device (1) being configured to switch to the first cycle when the pressure in the first tank (11) and in the second tank (12) is equalized.

2. Conveying device according to claim 1, comprising a collector tank (16) connecting the discharge line (14) to the second receptacle, the conveying device (1) being configured to create a high-pressure in the collector tank (16) while the pressure in the tank being emptied in the corresponding cycle is first changed to atmospheric pressure and then to the pressure in the tank being filled during said cycle.

3. Conveying device according to any of the preceding claims, wherein the pump means (15) comprise a vacuum connector (151) and a pressure connector (152), the first tank (11) and the second tank (12) comprise an air connector (111 ,121), and the conveying device (1) comprises a connecting device (17) comprising a plurality of valves for connecting the vacuum connector (151), the air connector (111) of the first tank (11), the pressure connector (152), and the air connector (121) of the second tank (12), the conveying device (1) further comprising a control system (500) configured to control the plurality of valves of the connecting device (17).

4. Conveying device according to claim 3, wherein the first tank (11) and a second tank (12) comprise an empty level sensor and a full level sensor in communication with the control system (500).

5. Conveying device according to claims 3 or 4, wherein the connecting device (17) comprises a stand-by valve (23) connected to the air connector (111, 121) of each of the first tank (11) and the second tank (12).

6. Conveying device according to any of claims 3 to 5, wherein the connecting device (17) comprises an air intake valve (26) connected to the vacuum connector (151) of the pump means (15), the air intake valve (26) being in an open position while a high-pressure is created in the tank being emptied and while the pressure in the tank being emptied is changed to atmospheric pressure, therefore permitting the passage of an amount of air such that the time required for filling the tank being filled in the corresponding cycle is greater than the time required for emptying the tank being emptied in said same cycle.

7. Conveying device according to any of claims 3 to 6, wherein the connecting device (17) comprises an connection valve (27) connectable to the air connectors (111, 121) of the first tank (11) and the second tank (12).

8. Conveying device according to any of claims 3 to 7, wherein the collector tank (16) comprises an air connector (161), and the pressure connector (152) is connectable to the air connector (161) of the collector tank (16).

9. Conveying device according to any of claims 3 to 8, wherein the connecting device (17) comprises a first four-way valve (21), a second four-way valve (22).

10. Conveying device according to any of claims 3 to 9, wherein the connecting device (17) comprises a third four-way valve (24).

11. Conveying device according to claim 10, wherein the connecting device (17) comprises a collector raising level valve (291) connected to the air connector (161) of the collector tank (16), the connecting device (17) preferably comprising a collector lowering level valve (292) connected to the air connector (161) of the collector tank (16).

12. Conveying device according to any of the preceding claims, wherein the first tank (11) has the same capacity as the second tank (12).

13. Method of pumping live fish from a first receptacle to a second receptacle by means of a conveying device (1), the conveying device (1) comprising a first tank (11) and a second tank (12) into which said live fish are pumped from the first receptacle and are supplied to the second receptacle, the method comprising a first cycle and a second cycle which are sequentially executed, **characterized in that** the first cycle comprises the steps of
- creating a low-pressure vacuum in the first tank (11) for filling the first tank (11) with live fish, the first tank (11) being therefore the tank being filled,
- simultaneously acting on the second tank (12) sequentially performing the steps of
∘ creating a high-pressure in the second tank (12) for emptying said second tank (12), the second tank (12) being therefore the tank being emptied, the time required for filling the first tank (11) being greater than the time required for emptying the second tank (12),
∘ changing the pressure in the second tank (12) to atmospheric pressure when the second tank (12) is emptied, and
∘ subsequently equalizing the pressure in the second tank (12) to the pressure in the first tank (11), and
- switching to the second cycle when the pressure in the first tank (11) and in the second tank (12) is equalized,
the second cycle comprising the steps of:
- creating a low-pressure vacuum in the second tank (12) for filling the second tank (12) with live fish, the second tank (12) being therefore the tank being filled, and
- simultaneously acting on the first tank (11) sequentially performing the steps of
∘ creating a high-pressure in the first tank (11) for emptying said first tank (12), the first tank (11) being therefore the tank being emptied, the time required for filling the second tank (12) being greater than the time required for emptying the first tank (11),
∘ changing the pressure in the first tank (11) to atmospheric pressure when the first tank (11) is emptied, and
∘ subsequently equalizing the pressure in the first tank (11) to the pressure in the second tank (12), and
- switching to the first cycle when the pressure in the first tank (11) and in the second tank (12) is equalized.

14. Method according to claim 13, wherein the conveying device (1) comprises a collector tank (16) connecting the first tank (11) and he second tank (12) to the second receptacle, the method comprising both in the first cycle and in the second cycle the step of creating a high pressure in the collector tank (16) while the pressure in the tank being emptied is first changed to atmospheric pressure and then to the pressure in the tank being filled during said cycle.

15. Method according to claim 14, wherein the conveying device (1) comprises a collector raising level valve (291) configured to allow the air inside the collector tank (16) flow to the outside of the collector tank (16), the collector raising level valve (291) being an adjustable flow control valve, the method comprising a step of regulating the collector raising level valve (291) such that the flow from the collector tank (16) to the second receptacle is a speed constant flow.
